# EUROPÄISCHE PATENTSCHRIFT

(11) **EP 1 478 124 B1**
(45) Veröffentlichungstag und Bekanntmachung des Hinweises auf die Patenterteilung: **06.03.2013**
(21) Anmeldenummer: 04011955.4
(22) Anmeldetag: 17.01.2000
(51) Int. Cl.: H04L 29/06, H04L 12/24

(54) **System und Verfahren zur Übertragung von Daten, insbesondere von Daten zum Bedienen und Beobachten eines Automatisierungssystems, über Internet mit asymmetrischer Internetverbindung**
System and method for transmission of data, in particular operating and monitoring data of an automation system, on the Internet with an assymetrical connection
Procédé et dispositif de transmission de données, en particulier de données de commande et d'observation d'un dispositif d'automatisation sur l'Internet avec une connection asymétrique

(30) Priorität: 28.01.1999 DE 19904331
(43) Veröffentlichungstag der Anmeldung: 17.11.2004
(62) Teilanmeldung aus: 00903530.4
(73) Patentinhaber: SIEMENS AKTIENGESELLSCHAFT, 80333 München (DE)
(72) Erfinder: Talanis, Thomas, 91336 Heroldsbach (DE); Volkmann, Frank, 90475 Nürnberg (DE)

(56) Entgegenhaltungen:
- DE-A1- 19 808 616
- BARUCH J E F ET AL: "REMOTE CONTROL AND ROBOTS: AN INTERNET SOLUTION", COMPUTING & CONTROL ENGINEERING JOURNAL,GB,STEVENAGE, Bd. 7, Nr. 1, 1. Februar 1996 (1996-02-01) , Seiten 39-45, XP000614098,

## Beschreibung

Die Erfindung betrifft ein System sowie ein Verfahren zur Übertragung von Daten über Internet, insbesondere von Daten zum Bedienen und Beobachten eines Automatisierungssystems.

Mit Hilfe des WWW (World Wide Web), welches auch als Internet bezeichnet wird, ist es möglich, von jedem beliebigen Rechner aus, der Zugang zum Internet hat, eine Datenverbindung zu einem sogenannten Web-Server oder Internet-Information-Server IIS aufzubauen. Der Zugriff auf einen Internet-Server erfolgt beispielsweise mit Hilfe bekannter Internet-Browser, z.B. dem Internet-Explorer der Firma Microsoft oder mit dem Internet-Browser der Firma Netscape. Beim Aufbau einer Datenverbindung von einem sogenannten Web-Client aus wird ein sogenannter Request an einen Internet-Server durch Eingabe und Abschicken einer sogenannten URL-Adresse abgegeben. Beim Zustandekommen einer Datenverbindung antwortet der gerufene Internet-Server mit einen so genannten HTML-Seite (HTML = Hyper Text Markup Language). Die sogenannten WWW-Clients wie beispielsweise Netscape oder Internet-Explorer kommunizieren mit dem WWW-Servern über das Hypertext Transport Protocol (HTTP). Jeder Datenverbindung zwischen WWW-Client und WWW-Server liegt somit ein Requestprotokoll und als Reaktion darauf ein sogenanntes Response-Protokoll zugrunde.

Aus DE-A-198 08 616 ist ein Verfahren zur Fernsteuerung von Geräten durch einen geographisch davon entfernt lokalisierten Rechner und zur Übertragung aktueller Informationen aus dem Gerät zum Rechner via Internet bekannt, wobei zwischen dem Rechner und dem Gerät ein bidirektionaler Informationskanal für den gegenseitigen Datenaustausch geschaltet wird.

Der Erfindung liegt die Aufgabe zugrunde, ein System und ein Verfahren zur Übertragung von Daten über Internet anzugeben, das eine zeitlich unabhängige, bidirektionale Übertragung von Daten auch zwischen zwei mit dem Internet koppelbaren Datenverarbeitungsvorrichtungen auch hinter Firewalls ermöglicht, auch wenn eine der beiden Datenverarbeitungsvorrichtungen im Internet nicht sichtbar ist, d.h. kein Internet-Server ist. Diese Aufgabe wird durch ein System bzw. durch ein Verfahren mit den in den Ansprüchen 1 bis 10 angegebenen Merkmalen gelöst.

Der Erfindung liegt die Erkenntnis zugrunde, dass mit Hilfe des Internets eine "aktive" Datenverbindung zu einem im Internet nicht sichtbaren Client nicht möglich ist, sondern lediglich eine Datenverbindung zwischen einem beliebigen mit dem Internet verbundenen Client mit jedem beliebigen im Internet sichtbaren Server. Dieser Nachteil wird auf überraschend einfache Weise dadurch gelöst, dass vom Client aus zwei voneinander unabhängige Datenverbindungen zum Internet-Server eines Automatisierungssystems aufgebaut werden. Hierzu werden vom Client aus, der nach Herstellung der bidirektionalen Datenverbindungen als vollwertiges Bedien- und Beobachtungssystem des Automatisierungssystems dienen kann, nacheinander zwei Verbindungsanforderungen an den Internet-Server des Automatisierungssystems gesendet. Der Internet-Server beantwortet diese Verbindungsanforderungen und stellt somit zwei asymmetrische voneinander unabhängige Datenverbindungen zur Verfügung, über die sowohl der Client als B&B-System wie auch das Automatisierungssystem von sich aus miteinander kommunizieren können. Zwischen Client und Server oder mit anderen Worten zwischen Bedien- und Beobachtungssystem und Automatisierungssystem wird funktional eine bidirektionale Datenverbindung sichergestellt, die auch eine Datenübertragung vom Server aus an dem Client ermöglicht. Dies beruht auf der Herstellung der vom Client aus aufgebauten zwei unabhängigen Datenverbindungen über Internet mit dem Server. Über diese beiden "Standleitungen" ist der Client mit dem Server permanent verbunden, so dass eine zeitlich voneinander unabhängige bidirektionale Datenübertragung in beiden Richtungen zwischen Client und Server ermöglicht wird. Eine derartige Datenverbindung ist besonders zum Bedienen und Beobachten eines Automatisierungssystems geeignet, wobei der Client als Bedienund Beobachtungssystem fungieren kann, welches von jedem beliebigen mit dem Internet verbunden Rechner aus aktivierbar ist. Im Gegensatz zu konventionellen Internet-Datenverbindungen ergibt sich somit ein asymmetrisches Datenübertragungsverfahren, das vom Client nicht die Notwendigkeit fordert, im Internet sichtbar zu sein oder einen sogenannten Web-Server (IIS = Internet Information Server) installiert zu haben. Dadurch wird es möglich, von jedem beliebigen Ort der Welt, vor und hinter Firewalls, eine bidirektionale Datenverbindung zu einem Server aufzubauen. Da die Datenverbindung vom Client aus , d.h. vom B&B-System aus aktiviert wird, ist es nicht erforderlich, dass der Server von sich aus aktiv eine Verbindung zum Client aufbaut. Darüber hinaus ist auch eine Änderung der Konfiguration des Clients nicht erforderlich. Ein Erhalt der Datenverbindung bzw. der Datenverbindungen kann dadurch sichergestellt werden, dass zur Erhaltung der Übertragungskanäle auch beim Nichtvorhandensein von Nutzdaten Scheindaten übertragen werden. Weiter werden zur Aufrechterhaltung einer permanenten Datenverbindung Informationen an den Internet-Server gesendet, die dem Internet-Server mitteilen, dass noch eine Übertragung von Nutzdaten beabsichtigt ist.

Eine besonderes vorteilhafte Anwendung, unter Nutzung vorhandener Internet-Infrastrukturen für eine bidirektionale Datenübertragung, besteht darin, dass das Verfahren zum Bedienen und Beobachten eines Automatisierungssystems über Internet vorgesehen ist.

Eine Verbindung der Automatisierungs- und Kommunikationstechnik kann auf einfache Weise derart gestaltet sein, dass das Bedien- und Beobachtungssystem des Client die Bereitstellung der Übertragungskanäle als verteiltes Objekt, insbesondere als DCOM-Objekt initiiert und dass der Verbindungsaufbau zum Automatisierungssystem über einen DCOM-Server erfolgt.

Im folgenden wird die Erfindung anhand der in den Figuren dargestellten Ausführungsbeispiele näher beschrieben und erläutert.

Es zeigen:
- FIG 1: ein Blockschaltbild eines Ausführungsbeispiels eines Automatisierungssystems mit Internet-Kopplung zum Bedienen und Beobachten,
- FIG 2: eine schematische, zeitliche Darstellung für den bidirektionalen Verbindungsaufbau zwischen Client und Automatisierungssystem und
- FIG 3: eine schematische, zeitliche Darstellung für mögliche Nutzdatenkommunikation zwischen Client und Automatisierungssystem.

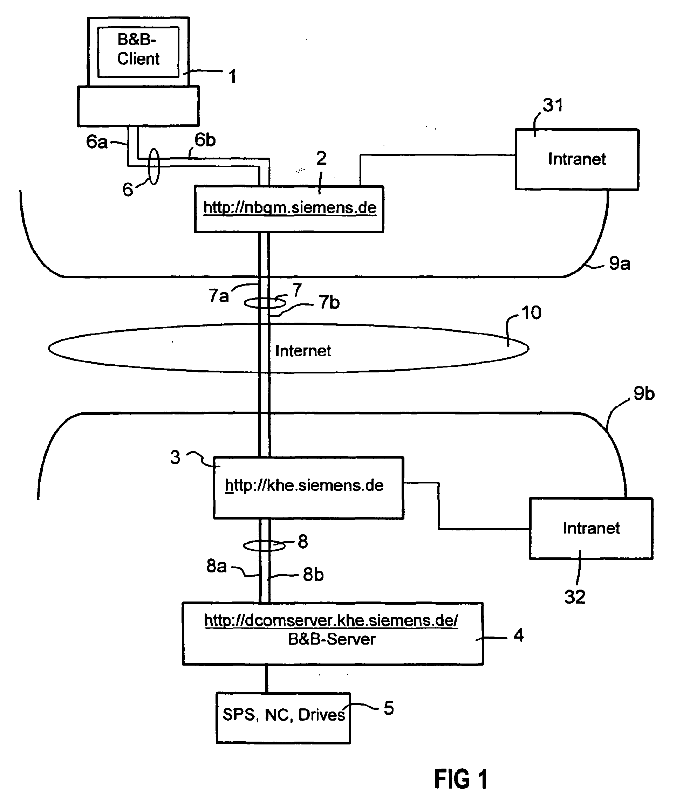

Figur 1 zeigt ein Ausführungsbeispiel eines Systems zum Bedienen und Beobachten von Automatisierungssystemen 5, welche beispielsweise speicherprogrammierbare Steuerungen (SPS), numerische Steuerungen (NC) und/oder Antriebe (Drives) aufweisen. Das System weist ein Bedien- und Beobachtungssystem 1 (B&B-Client) auf, welches über ein internes Datennetz 6 , z.B. Ethernet mit einem Firewall-Rechner 2 (= Proxy) gekoppelt ist. Dem Bedien- und Beobachtungssystem 1, welches im folgenden abkürzend auch als B&B-System 1 bezeichnet wird, ist eine lokale Intranet-Adresse zugeordnet, die im Internet nicht bekannt sein muß. Mit Hilfe der Linie 9a ist in Fig. 1 der Firewall des Firewall-Rechners 2 angedeutet, der das interne Kommunikationsnetz 31 (= Intranet 31) des Firewall-Servers 3 umgibt. Mit dem Bezugszeichen 10 ist das weltweite Datenkommunikationsnetz Internet gekennzeichnet. Der Firewall-Rechner 2 ist über eine Verbindungsleitung 7, z.B. ISDN mit dem Internet 10 koppelbar. Das Automatisierungssystem 5 ist über einen Internet-Server 4, der als B&B-Server für das Automatisierungssystem 5 dient und der die Internet-Adresse dcomserver.khe.siemens.de/ aufweist, über eine Verbindungsleitung 8 und jeweils einen zweiten Firewall-Rechner 3 mit dem Internet 10 koppelbar. Der zweite Firewall-Rechner 3 umgibt das dem Firewall-Rechner 3 zugeordnete Intranet 32 und ist im Internet 10 unter der Internet-Adresse khe.siemens.de sichtbar.

Im folgenden soll anhand eines Verbindungsaufbaus zwischen dem Client 1 und dem B&B-Server 4 beispielhaft der Aufbau einer zeitlich voneinander unabhängigen, bidirektionalen Sendeund Empfangsverbindung zwischen dem Client 1 und dem B&B Server 4 über das Internet 10 erläutert werden. Hierzu kommt ein asymmetrisches Verfahren zum Einsatz, welches es ermöglicht auch vom Client 1 aus, der selbst im Internet 10 nicht sichtbar zu sein braucht, d.h. über keine eigene gültige Internet-Adresse verfügt, eine bidirektionale Datenverbindung aufzubauen. Hierzu schickt der Client 1 einen ersten Request über Internet an den Internet-Server 4, auf den der Internet-Server 4 mit einer Antwort reagiert. Zur Vermeidung einer zeitlichen Unterbrechung der Antwort, und damit eines Abbruches der Datenverbindung, wird die Dauer der Antwort "unendlich" lang ausgedehnt. Hierzu wird dem System mitgeteilt, dass noch weitere Daten geschickt werden sollen. Hierdurch ergibt sich ein Antwort-Kanal, über den der Webserver 4 und damit das Automatisierungssystem 5 jederzeit Daten an den Client 1 und damit an das B&B-System 1 senden kann. Dieser erste Datenübertragungskanal ist in Figur 1 mit dem Bezugszeichen 6a, 7a, 8a gekennzeichnet. Der Aufbau eines zweiten Datenübertragungskanals 6b, 7b, 8b erfolgt dadurch, dass der Client 1 einen zweiten Request, d.h. eine zweite Verbindungsanforderung an den Internet-Server 4 des Automatisierungssystems 5 sendet, und so einen weiteren Kanal 6b, 7b, 8b zum Server 4 aufbaut. Auf diesem kann der Client als Hinkanal seine Anfrage(n) an den Server 4 absenden. Insgesamt ergibt sich aus Sicht des Clients 1 somit ein Hinkanal 6a, 7a, 8a sowie ein Rückkanal 6b, 7b, 8b. Über diese beiden Kanäle können der Client 1 sowie der Internet-Server 4 zeitlich unabhängig voneinander bidirektional Daten senden und empfangen.

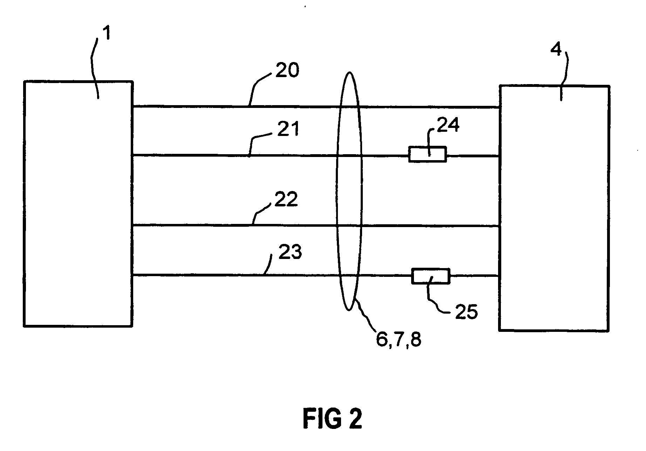

FIG 2 zeigt eine schematische, zeitliche, Darstellung für den bidirektionalen Verbindungsaufbau zwischen einem Client 1 als B&B-System und einem Internet-Server 4 (IIS = Internet Information Server) eines Automatisierungssystems 5 (vgl. Fig. 1). In einem ersten Schritt erfolgt dabei ein vom Client 1 aus eingeleiteter erster "Get"-Request 20 (= Verbindungsanforderung, Rückkanal) an den Server 4. Der Server 4 antwortet im Schritt 21 in Form einer Response, hier als Acknoledge zu interpretieren. Im nächsten Schritt wird vom Client 1 aus ein "Post"-Request 22 (=Verbindungsanforderung, Hinkanal) an den Server 4 geschickt, der hierauf mit einer Antwort 23 als Response antwortet. Der "Get"-Kanal wird vor dem Post Kanal etabliert, damit der Server hier bei dem Acknowledge schon Verbindungsdaten an den Client schicken kann, die zum Aufbau der 2. ("Post") Verbindung benötigt werden.

Der prinzipielle bidirektionelle Verbindungsaufbau zwischen Client 1 und Server 4 erfolgt somit in einen zweistufigen Request 20, 22 mit jeweils zugehöriger Response 21, 23. Die Aufrechterhaltung der Datenverbindungen wird jeweils dadurch sichergestellt, dass zur Erhaltung der Übertragungskanäle auch beim Nichtvorhandensein von Nutzdaten Scheindaten 24 übertragen werden und dass Informationen an den B&B-Server 4 gesendet werden, die dem B&B-Server 4 mitteilen, dass noch eine Übertragung von Nutzdaten beabsichtigt ist.

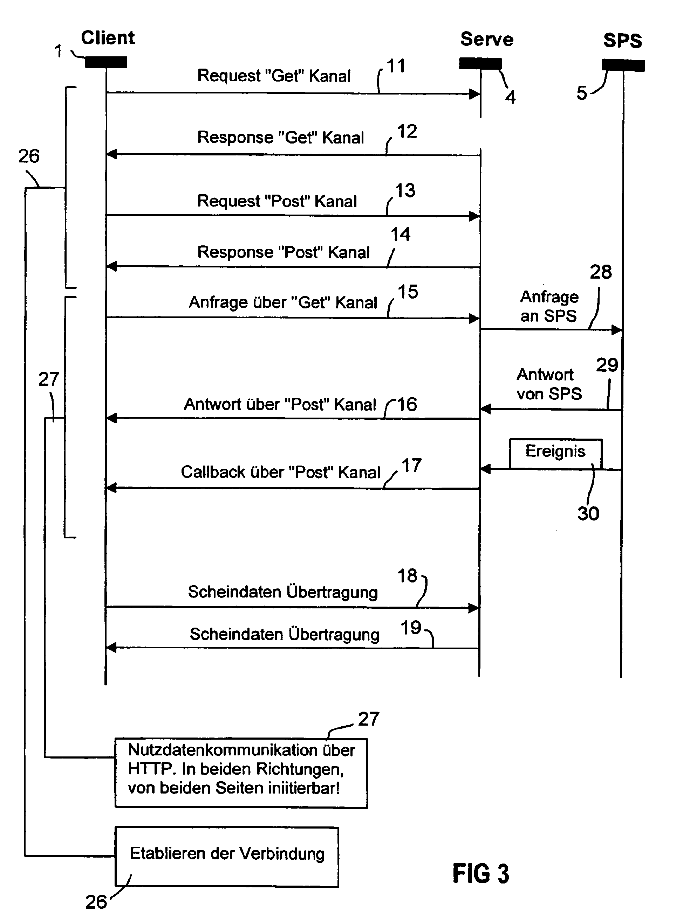

Fig. 3 zeigt den zeitlichen Ablauf der Etablierung 26 eines Hin- sowie Rückkanals zwischen einem B&B-System 1 und einem B&B-Servers 4, an den ein beispielhaft als SPS (= Speicherprogrammierbare Steuerung) bezeichnetes Automatisierungssystem 5 angeschlossen ist. Die Darstellung erfolgt mit Hilfe der UML-Notation (Unified Modelling Language). Weiterhin zeigt Fig. 3 die bidirektionale Kommunikation über diese Kanäle, die nach Etablierung der Verbindung zeitlich unabhängig voneinander von Client 1 und Server 4 initiiert werden können. Der zeitliche Ablauf zur Etablierung der Verbindung ist folgender: Der Client 1 stellt eine HTTP-Get Anfrage 11 an den Server 4, der diese mit einer Response 12 quittiert, wobei mit der Quittung die Verbindung nicht abgebaut wird. Über diese Verbindung ("Get-Kanal") sendet der Server 4 sowie das mit dem Server gekoppelte Automatisierungssystem 5 alle an den Client 1 zu sendende Daten. Nach der Response 12 des Servers 4 schickt der Client eine HTTP-Post Anfrage 13 an den Server 4, der wiederum mit einer Response 14 antwortet. Über diese Verbindung ("Post-Kanal") sendet der Client 1 alle Daten, die er an den Server 4 und das damit gekoppelte Automatisierungssystem 5 beispielsweise als Anfrage 28 senden will. Obwohl der Request-Response-Zykluß auf dem Post-Kanal beendet wird, bleibt die Verbindung bestehen. Bei Bedarf sendet der Client 1 eine Anfrage an den Server 4 über den Get-Kanal 15, worauf der Server mit einer Antwort auf dem Post-Kanal 16 reagiert (= synchrones Verhalten). Will der Server 4 dem Client 1 eine Nachricht mitteilen, z.B. eine Antwort 29 oder eine Reaktion auf ein Ereignis 30 in der SPS 5, so kann er diese auf dem Post-Kanal senden, ohne dass vorher der Klient eine Anfrage gestellt hat (= Callback 17). Dieses wäre bei einer "normalen" HTTP-Verbindung nicht möglich.

Insgesamt ergibt sich somit eine Nutzdatenkommunikation 27 über Internet in beide Richtungen, die von beiden Seiten aus iniziierbar ist, zeitlich unabhängig. Damit wird es möglich vorhandene Kommunikationswege des Internet auch im Bereich der Automatisierungstechnik in gewohnter Weise für Bedienund Beobachtungszwecke als HMI-Interface (Human Machine Interface) zu nutzen. Als vorteilhafte Anwendung kommt beispielsweise das Bedien- und Beobachtungssystem WinCC der Fa. Siemens in Betracht. Das erfindungsgemäße System und Verfahren ermöglicht die Übertragung von DCOM-Aufträgen vom Client 1 zum Internet-Server 4. Das Besondere dabei ist, dass es das Verfahren erlaubt, dass der Internet-Server 4 DCOM-Ereignisse, sogenannte Events an seinen Client senden kann, ohne dass dieser eine "echte", d.h. im Internet sichtbare Adresse besitzt. Auf der Client-Seite sind somit keine zusätzlichen Kosten erforderlich, da Internet-Browser wie Internet-Explorer der Firma Microsoft oder der Internet-Browser der Fa. Netscape überall verfügbar sind. Für einen Datenaustausch zwischen Automatisierungssystem und B&B-Anwender beispielsweise für Alarmierungszwecke sind somit keine speziellen Sonderlösungen erforderlich.

Zusammenfassend betrifft die Erfindung somit ein System sowie ein Verfahren zur Übertragung von Daten über Internet, insbesondere von Daten zum Bedienen und Beobachten eines Automatisierungssystems 5. Für eine bidirektionale Nutzdatenverbindung auch hinter Firewalls über Internet in beiden Richtungen auch von einem Client aus, der nicht als Server im Internet sichtbar ist, wird eine Verfahren bzw. ein System vorgeschlagen, bei dem von einer ersten Datenverarbeitungsvorrichtung 1 eines Client, insbesondere von einem Bedien- und Beobachtungssystem 1, aus über eine Internet-Verbindung 6, 7, 8 eine erste Verbindungsanforderung 20 zum Aufbau eines ersten Übertragungskanals an einen Internetserver 4 eines Automatisierungssystems 5 gesendet wird. Daneben wird vom Client 1 aus eine zweite Verbindungsanforderung 22 zum Aufbau eines zweiten Übertragungskanals 31 an den Internetserver 4 gesendet wird, wobei der erste 30 und der zweite 31 Übertragungskanal zum zeitlich voneinander unabhängigen, bidirektionalen Senden und Empfangen von Daten zwischen dem Client und dem Internetserver 4 über Internet vorgesehen sind. Eine zeitlich unbegrenzte Nutzungsdauer der Übertragungskanäle wird dadurch sichergestellt, dass zur Erhaltung der Übertragungskanäle auch beim Nichtvorhandensein von Nutzdaten Scheindaten übertragen werden.

## Patentansprüche

1. Verfahren zur Übertragung von Daten über Internet, insbesondere von Daten zum Bedienen und Beobachten eines Automatisierungssystems (5), bei dem von einem Client (1), insbesondere von einem Bedien- und Beobachtungssystem (1), aus über eine Internet-Verbindung (6, 7, 8) eine erste Verbindungsanforderung (20) zum Aufbau eines ersten Übertragungskanals (6a,7a,8a) an einen Internetserver (4) insbesondere eines Automatisierungssystems (5) gesendet wird und bei dem vom Client (1) aus eine zweite Verbindungsanforderung (22) zum Aufbau eines zweiten Übertragungskanals (6b,7b,8b) an den Internetserver (4) gesendet wird,
wobei der erste (6a,7a,8a) und der zweite (6b,7b,8b) Übertragungskanal zum zeitlich voneinander unabhängigen, bidirektionalen Senden und Empfangen von Nutzdaten (15,16,17) zwischen dem Client (1) und dem Internetserver (4) über Internet (10) vorgesehen sind, wobei der erste Übertragungskanal (6a,7a,8a) als Rückkanal zum Senden von Nutzdaten (15,16,17) vom Internetserver (4) zum Client (1) und der zweite Übertragungskanal (6b,7b,8b) als Hinkanal zum Senden von Nutzdaten (15,16,17) vom Client (1) zum Internetserver (4) verwendet wird.

2. Verfahren nach Anspruch 1,
**dadurch gekennzeichnet,**
**dass** zur Erhaltung der Übertragungskanäle (6a,7a,8a;6b,7b,8b) auch beim Nichtvorhandensein von Nutzdaten (15,16,17) Scheindaten (18,19) übertragen werden.

3. Verfahren nach einem der Ansprüche 1 oder 2,
**dadurch gekennzeichnet,**
**dass** zur Erhaltung der Übertragungskanäle (6a,7a,8a;6b,7b,8b) Informationen an den Internet-Server (4) gesendet werden, die dem Internet-Server (4) mitteilen, dass noch eine Übertragung von Nutzdaten (15,16,17) beabsichtigt ist.

4. Verfahren nach einem der Ansprüche 1 bis 3,
**dadurch gekennzeichnet,**
**dass** das Verfahren zum Bedienen und Beobachten eines Automatisierungssystems (5) über Internet (10) vorgesehen ist.

5. Verfahren nach einem der Ansprüche 1 bis 4,
**dadurch gekennzeichnet,**
**dass** das Bedien- und Beobachtungssystem (1) des Client die Bereitstellung der Übertragungskanäle als verteiltes Objekt, insbesondere als DCOM-Objekt initiiert und dass der Verbindungsaufbau zum Automatisierungssystem (5) über einen DCOM-Server (4) erfolgt.

6. System zur Übertragung von Daten über Internet (10), insbesondere von Daten zum Bedienen und Beobachten eines Automatisierungssystems (5), mit einer mit dem Internet (10) koppelbaren ersten Datenverarbeitungsvorrichtung (1) eines Client (1), wobei die erste Datenverarbeitungsvorrichtung (1) zum Aufbau einer ersten Datenverbindung (3a) in Form eines ersten Übertragungskanals (6a,7a,8a) sowie einer zweiten Datenverbindung (3b) in Form eines zweiten Übertragungskanals (6b,7b,8b) an einen Internet-Server (4) insbesondere eines Automatisierungssystems (5) vorgesehen ist,
wobei der erste (6a,7a,8a) und der zweite (6b,7b,8b) Übertragungskanal zum zeitlich voneinander unabhängigen, bidirektionalen Senden und Empfangen von Nutzdaten (15,16,17) zwischen dem Client (1) und dem Internetserver (4) über Internet (10) vorgesehen sind, wobei der erste Übertragungskanal (6a,7a,8a) als Rückkanal zum Senden von Nutzdaten (15,16,17) vom Internetserver (4) zum Client (1) und der zweite Übertragungskanal (6b,7b,8b) als Hinkanal zum Senden von Nutzdaten (15,16,17) vom Client (1) zum Internetserver (4) verwendet wird.

7. System nach Anspruch 6,
**dadurch gekennzeichnet,**
**dass** das System Mittel zur Übertragung von Scheindaten (18,19) zur Erhaltung der Übertragungskanäle (6a,7a,8a; 6b,7b,8b) auch beim Nichtvorhandensein von Nutzdaten (15,16,17) aufweist.

8. System nach einem der Ansprüche 6 oder 7,
**dadurch gekennzeichnet,**
**dass** das System zur Erhaltung der Übertragungskanäle (6a,7a,8a;6b,7b,8b) Mittel aufweist, die dem Internet-Server (4) mitteilen, dass noch eine Übertragung von Nutzdaten (15,16,17) beabsichtigt ist.

9. System nach einem der Ansprüche 6 bis 8,
**dadurch gekennzeichnet,**
**dass** das System zum Bedienen und Beobachten eines Automatisierungssystems (5) über Internet (10) vorgesehen ist.

10. System nach einem der Ansprüche 6 bis 9,
**dadurch gekennzeichnet,**
**dass** das Bedien- und Beobachtungssystem (1) die Bereitstellung der Übertragungskanäle (6a,7a,8a;6b,7b,8b) als verteiltes Objekt, insbesondere als DCOM-Objekt initiiert und dass der Verbindungsaufbau zum Automatisierungssystem (5) über einen DCOM-Server erfolgt.

## Claims

1. Method for transmitting data over the internet, in particular data for operating and monitoring an automation system (5), in which a first connection request (20) for setting up a first transmission channel (6a,7a,8a) is sent from a client (1), in particular from an operator control and monitoring system (1), via an internet connection (6, 7, 8) to an internet server (4), in particular of an automation system (5), and in which a second connection request (22) for setting up a second transmission channel (6b,7b,8b) is sent from the client (1) to the internet server (4),
wherein
the first transmission channel (6a,7a,8a) and the second transmission channel (6b,7b,8b) are provided for the bidirectional sending and receiving, independently of one another in time, of user data (15,16,17) between the client (1) and the internet server (4) over the internet (10), with the first transmission channel (6a,7a,8a) being used as a back channel for sending user data (15,16,17) from the internet server (4) to the client (1) and the second transmission channel (6b,7b,8b) being used as a forward channel for sending user data (15,16,17) from the client (1) to the internet server (4).

2. Method according to claim 1,
**characterised in that**
dummy data (18,19) is transmitted even in the absence of user data (15,16,17) in order to maintain the transmission channels (6a,7a,8a;6b,7b,8b) .

3. Method according to one of claims 1 or 2,
**characterised in that**
information notifying the internet server (4) that there is still an intention to transmit user data (15,16,17) is sent to the internet server (4) in order to maintain the transmission channels (6a,7a,8a;6b,7b,8b).

4. Method according to one of claims 1 to 3,
**characterised in that**
the method for operating and monitoring an automation system (5) is provided over the internet (10).

5. Method according to one of claims 1 to 4,
**characterised in that**
the operator control and monitoring system (1) of the client initiates the provision of the transmission channels as a distributed object, in particular as a DCOM object, and **in that** the connection setup to the automation system (5) is effected by way of a DCOM server (4).

6. System for transmitting data over the internet (10), in particular data for operating and monitoring an automation system (5), comprising a first data processing device (1) of a client (1) which can be coupled to the internet (10), with the first data processing device (1) being provided for setting up a first data connection (3a) in the form of a first transmission channel (6a,7a,8a) and a second data connection (3b) in the form of a second transmission channel (6b,7b,8b) to an internet server (4), in particular of an automation system (5),
wherein
the first transmission channel (6a,7a,8a) and the second transmission channel (6b,7b,8b) are provided for the bidirectional sending and receiving, independently of one another in time, of user data (15,16,17) between the client (1) and the internet server (4) over the internet (10), with the first transmission channel (6a,7a,8a) being used as a back channel for sending user data (15,16,17) from the internet server (4) to the client (1) and the second transmission channel (6b,7b,8b) being used as a forward channel for sending user data (15,16,17) from the client (1) to the internet server (4).

7. System according to claim 6,
**characterised in that**
the system has means for transmitting dummy data (18,19) in order to maintain the transmission channels (6a,7a,8a;6b,7b,8b) even in the absence of user data (15,16,17).

8. System according to one of claims 6 or 7,
**characterised in that**
the system has means for maintaining the transmission channels (6a,7a,8a;6b,7b,8b), which means notify the internet server (4) that there is still an intention to transmit user data (15,16,17).

9. System according to one of claims 6 to 8,
**characterised in that**
the system for operating and monitoring an automation system (5) is provided over the internet (10).

10. Device according to one of claims 6 to 9,
**characterised in that**
the operator control and monitoring system (1) initiates the provision of the transmission channels (6a,7a,8a;6b,7b,8b) as a distributed object, in particular as a DCOM object, and **in that** the connection setup to the automation system (5) is effected by way of a DCOM server.

## Revendications

1. Procédé de transmission de données par l'internet, notamment de données de commande et d'observation d'un système ( 5 ) d'automatisation, dans lequel il est envoyé à un serveur ( 4 ) de l'internet, notamment d'un système (5) d'automatisation, par un client (1), notamment par un système ( 1 ) de commande et d'observation, par l'intermédiaire d'une liaison ( 6, 7, 8 ) de l'internet, une première demande ( 20 ) de liaison pour l'établissement d'un premier canal ( 6a, 7a, 8a ) de transmission et dans lequel il est envoyé au serveur ( 4 ) de l'internet par le client ( 1 ) une deuxième demande ( 22 ) de liaison pour l'établissement d'un deuxième canal ( 6b, 7b, 8b ) de transmission,
dans lequel le premier ( 6a, 7a, 8a ) et le deuxième ( 6b, 7b, 8b ) canal de transmission sont prévus pour l'émission et la réception bidirectionnelle et indépendamment l'un de l'autre dans le temps de données ( 15, 16, 17 ) utiles entre le client ( 1 ) et le serveur ( 4 ) de l'internet par l'internet ( 10 ), le premier canal ( 6a, 7a, 8a ) de transmission étant utilisé comme canal de retour pour l'envoi de données ( 15, 16, 17 ) utiles du serveur ( 4 ) de l'internet au client ( 1 ) et le deuxième canal ( 6b, 7b, 8b ) de transmission comme canal d'aller pour l'envoi de données (15, 16, 17) utiles du client ( 1 ) au serveur ( 4 ) de l'internet.

2. Procédé suivant la revendication 1,
**caractérisé**
**en ce que** pour le maintien des canaux ( 6a, 7a, 8a,; 6b, 7b, 8b ) de transmission, même s'il n'y a pas présence de données (15, 16, 17) utiles, on envoie des données (18, 19) factices.

3. Procédé suivant l'une des revendications 1 ou 2,
**caractérisé**
**en ce que** pour conserver les canaux ( 6a, 7a, 8a; 6b, 7b, 8b ) de transmission, on envoie au serveur ( 4 ) de l'internet des informations qui font part au serveur ( 4 ) de l'internet que l'on envisage encore une transmission de données ( 15, 16, 17 ) utiles.

4. Procédé suivant l'une des revendications 1 à 3,
**caractérisé**
**en ce que** le procédé est prévu pour la commande et l'observation d'un système (5) d'automatisation par l'internet ( 10 ).

5. Procédé suivant l'une des revendications 1 à 4,
**caractérisé**
**en ce que** le système ( 1 ) de commande et d'observation du client lance la préparation des canaux de transmission sous la forme d'un objet partagé, notamment sous la forme d'un objet DCOM, et en ce que l'établissement de la liaison vers le système ( 5 ) d'automatisation s'effectue par un serveur ( 4 ) DCOM.

6. Système de transmission de données par l'internet ( 10 ), notamment de données de commande et d'observation d' un système ( 5 ) d'automatisation, comprenant un premier dispositif ( 1 ) de traitement de données d'un client ( 1 ) pouvant être couplé par l'internet (10) , le premier dispositif ( 1 ) de traitement de données étant prévu pour l'établissement d'une première liaison ( 3a ) de données sous la forme d'un premier canal ( 6a, 7a, 8a ) de transmission, ainsi que d'une deuxième liaison ( 3b ) de données sous la forme d'un deuxième canal ( 6b, 7b, 8b ) de transmission avec un serveur ( 4 ) de l'internet, notamment d'un système ( 5 ) d'automatisation,
dans lequel
le premier ( 6a, 7a, 8a ) et le deuxième ( 6b, 7b, 8b ) canal de transmission sont prévus pour l'émission et la réception bidirectionnelle et indépendamment l'un de l'autre dans le temps de données ( 15, 16, 17 ) utiles entre le client ( 1 ) et le serveur ( 4 ) de l'internet par l'internet ( 10 ), le premier canal ( 6a, 7a, 8a ) de transmission étant utilisé comme canal de retour pour l'envoi de données ( 15, 16, 17 ) utiles du serveur ( 4 ) de l'internet au client ( 1 ) et le deuxième canal ( 6b, 7b, 8b ) de transmission comme canal d'aller pour l'envoi de données ( 15, 16, 17 ) utiles du client ( 1 ) au serveur ( 4 ) de l'internet.

7. Système suivant la revendication 6,
**caractérisé**
**en ce que** le système a des moyens de transmission de données ( 18, 19 ) factices pour la conservation des canaux ( 6a, 7a, 8a; 6b, 7b, 8b ) de transmission, même s'il n'y a pas présence de données (15,16,17) utiles.

8. Système suivant l'une des revendications 6 ou 7,
**caractérisé**
**en ce que** le système a, pour la conservation des canaux ( 6a, 7a, 8a ; 6b, 7b, 8b ) de transmission, des moyens qui font part au serveur (4) de l'internet qu'une transmission de données ( 15, 16, 17 ) utiles est envisagée encore.

9. Système suivant l'une des revendications 6 à 8,
**caractérisé**
**en ce que** le système est prévu pour la commande et l'observation d'un système (5) d'automatisation par l'internet ( 10 ).

10. Système suivant l'une des revendications 6 à 9,
**caractérisé**
**en ce que** le système ( 1 ) de commande et d'observation du client lance la préparation des canaux de transmission sous la forme d'un objet partagé, notamment sous la forme d'un objet DCOM, et en ce que l'établissement de la liaison vers le système ( 5 ) d'automatisation s'effectue par un serveur ( 4 ) DCOM.
